# EUROPEAN PATENT APPLICATION

(11) **EP 2 842 694 A1**
(43) Date of publication of application: **04.03.2015**
(21) Application number: 14250101.4
(22) Date of filing: 26.08.2014
(51) Int. Cl.: B25B 23/14, F16B 23/00, F16B 41/00

(54) **Security fastener**

(30) Priority: 28.08.2013 GB 201315373
(71) Applicant: Integrity Products Ltd, Halesowen, West Midlands B63 3JF (GB)
(72) Inventor: Burnard, Peter George, Halesowen, West Midlands B63 3JF (GB); Shelton, Peter William, Halesowen, West Midlands B63 3JF (GB)
(74) Representative: Parker, Nigel Edward

(57) **Abstract**

A security fastener (1) comprising a head (4) with a formation co-operable with a separately formed or non-integral component part (5) having a first portion and a second, frangible portion, said first portion being co-operable, in use, with an access tool, the arrangement being such that the component part can be attached to the head via said co-operable formation prior to the fastener being attached to an item or items with the use of said access tool in co-operation with said first portion, said frangible portion being broken, in use, to leave the head with no convenient means or adapted configuration for an access tool to attain purchase to remove the remainder of the fastener. In one embodiment the tool drive is a hexagon for use with a standard hexagon socket or spanner. The neck portion (5b) breaks at the bottom (weakest area) at a preselected torque after the fastener (1) has been tightly engaged in the fastener.

## Description

This invention relates to improvements in or relating to fasteners and is more particularly concerned with a security fastener intended for permanent, non-removable, location in an item or items to which it is attached, in use.

Security fasteners are used in many tamper-proof, anti-theft or vandal resistant environments and may, for example, be used in prisons, banks, or in the automotive, Ministry of Defence or aerospace industries where security is at a premium.

Such security fasteners may take the form of a bolt or screw having a shank or head with an integral component part consisting of a first portion that may be operatively matched to a suitable, access tool, such as a spanner, and a second, frangible, neck portion in between said first portion and the head. Thus, an access tool can be used in co-operation with the first portion to rotate the fastener until it is tightly fixed or engaged in the item/s to which it is being attached. Further rotation of the first portion in the same sense will result in the bottom of the frangible neck portion breaking at a pre-selected torque and the first portion and neck portion becoming separated from the head portion. Thus, the remainder of the fastener is left with no convenient means (such as a slot or hexagon head or other adapted configuration) for an access tool to attain purchase on the head to remove it.

Whilst the format of such known security fasteners may work well in practice (usually in conjunction with other such fasteners incorporated in said item/s) there tend to be certain disadvantages associated with such fasteners.

Such fasteners are fashioned as one-piece integral units. Almost all such break or shear off fasteners with male threads are manufactured as bespoke turned parts in small batches, due to the wide range of diameters, thread types and lengths that may be required; this, disadvantageously, tends to result in inherently long lead times and/or relatively expensive unit costs, more particularly in comparison with other male threaded fasteners manufactured by other production methods (e.g. cold heading).

Accordingly, it is an object of the present invention to at least alleviate one or more of the aforementioned, or other, disadvantages associated with security fasteners.

According to the present invention there is provided a security fastener comprising a head with a formation co-operable with a separately formed or non-integral component part having a first portion and a second, frangible portion, said first portion being co-operable, in use, with an access tool, the arrangement being such that the component part can be attached to the head via said co-operable formation prior to the fastener being attached to an item or items with the use of said access tool in co-operation with said first portion, said frangible portion being broken, in use, to leave the head with no convenient means or adapted configuration for an access tool to attain purchase to remove the remainder of the fastener.

Further according to the present invention there is provided a component part adapted for attachment to the head of the security fastener as described in the immediately preceding paragraph.

Further according to the present invention there is provided a component part adapted for attachment to the head of a fastener to provide a security fastener, said component part being co-operable with a formation on the fastener head and said component part having a first portion and a second, frangible portion, said first portion being co-operable, in use, with an access tool, the arrangement being such that the component part can be attached to the head via said co-operable formation prior to the fastener being attached to an item or items with the use of said access tool in co-operation with said first portion, said frangible portion being broken, in use, to leave the head with no convenient means or adapted configuration for an access tool to attain purchase to remove the remainder of the fastener.

Usually, the security fastener will be attached to said item/s on appropriate rotation of an access tool engaging said first portion of the component part.

In one embodiment of the security fastener, the co-operable formation comprises a slot or recess (e.g. hexagonal recess) that receives the component part. Usually, the frangible portion will be a neck portion and the bottom of the neck portion will break off at or just below the top of the head leaving no projection that could be engaged by an access tool.

Alternatively, the component part may be provided with a socket or recess (e.g. polygonal or hexagonal recess) that receives a co-operable formation in the form of the head of the security fastener.

In either case, the component part may be fixed to the fastener head effectively in a substantially permanent or non-removable manner e.g. by an interference fit and/or by using an adhesive or by any other convenient means.

Usually, the component part comprises an integral third portion of greater width than the neck portion, said third portion being insertable in, or attachable to or over, as the case may be, the co-operable formation on the fastener head.

The co-operable formation may comprise e.g. a hexagonal or polygonal recess or hexagonal/polygonal head.

Usually, where a socket or recess is provided as aforesaid and in said third portion, the bottom of the neck portion will break off at or just below the top of said third portion leaving no projection that could be engaged by an access tool.

Said co-operable formation may comprise a known formation normally utilisable for screwing the head and shank into/onto said item or items. Said formation may be multilobular (a star configuration).

Advantageously, in one embodiment of the security fastener, the component part may be fashioned inexpensively from common bar stock already matched to the co-operable formation (recess) in said head.

Thus, where provided, said first and third portions of the component part may be of a similar shape and size (width and/or diameter).

Usually, in use, the first portion and neck portion will be broken away from the remainder of the fastener, leaving the third portion (where provided) attached to the fastener head blocking access to said co-operable formation with an access tool.

Further according to the present invention there is provided a method of making a security fastener, said method comprising making a separate component part having a first portion co-operable, in use, with an access tool and having a frangible neck portion, said method comprising attaching the separate component part to a head of the security fastener in a non-removable or permanent manner, e.g. by adhesive.

Preferably, said method comprises making the component part with a third portion adjacent to the neck portion, said third portion being attached to a co-operable formation on said head.

Preferably, in order to reduce costs, said co-operable formation is an existing, standard formation rather than a special, purpose made formation.

Further according to the present invention there is provided security fastener having a head, a (preferably threaded) shank and a component part attached to the head and which can be broken at a pre-selected torque during attachment of the fastener to an item or items (to leave the head with no convenient means or adapted configuration for an access tool to attain purchase on the head to remove the remainder of the fastener), characterised by the component part being fashioned as a separate unit non-removably attached or attachable to the head.

Further according to the present invention there is provided a security fastener, having one or more of the following features:-
a) two separately made parts substantially permanently attached to one another, preferably comprising a component part having a frangible neck portion, said component part preferably being non-removably attached or attachable to a head of a fastener
b) a component part non-removably attached or attachable to a co-operable formation on a head of a fastener, said formation, preferably, being a standard formation than can be utilised with an access tool,
c) a component part non-removably attached/attachable to a fastener head, said component part having a first portion co-operable with an access tool.

Many advantages of the present invention will be apparent from the following description and drawings.

Embodiments of a security fastener in accordance with the present invention will now be provided, by way of example only, with reference to the following simplified diagrammatic drawings, in which:
FIGURES A and B show side views of two security fasteners in the form of threaded screws, the arrangements of which are known per se;
FIGURE 1 shows a series of four side views of a first embodiment of a security fastener in accordance with the present invention schematically illustrating how the fastener can be assembled together and engaged in an item or items (not shown) to provide security
FIGURE 2 shows enlarged plan and side views of a separately formed component part shown in FIGURE 1;
FIGURE 3 shows enlarged plan and side views of a modified version of the separately formed component part shown in FIGURE 2;
FIGURE 4 shows a series of four side views of a second embodiment of a fastener in accordance with the present invention schematically illustrating how the fastener can be assembled together and engaged in an item or items (not shown) to provide security

Referring to FIGURE A of the drawings, a known security screw fastener 100 is fashioned as a one-piece integral unit. The fastener 100 has a threaded shank 101 and a circular, counter sink head 102 integral with a component part 103,104 consisting of a first portion 103 and a frangible, tapered neck portion 104. The first portion 103 is of a hexagon shape operatively matched to a suitable access tool such as a spanner (not shown) and the neck portion tapers downwardly from said first portion to a central, minimum diameter portion at the bottom of the neck portion.

The fastener 100 can be located in an item or items requiring security by screwing the shank into a prepared opening (or hole) in said item/s utilising the access tool operatively engaging and rotating the first portion 103 of said component in unison with the head 102, frangible neck portion 104 and shank 101. The fastener 100 can be rotated until the lower portion of head 102 tightly seats in the prepared opening. Further rotation of the tool in the same sense will result in the neck portion 104 breaking at the bottom at a pre-selected torque value, in a known manner. Thus, the component part 103,104 becomes separated from the remainder 101,102 of the fastener 100 leaving no convenient means or adapted configuration for an access tool to attain purchase to remove the fastener. The head 102 should be counter sunk in the prepared opening and the periphery of the head being circular has no convenient means or adapted configuration for an access tool to attain purchase to remove the fastener. Furthermore, since the bottom of the neck portion 104 will break off substantially flush with the top of the head portion 102 there will be no internal configuration allowing an access tool to gain purchase on the fastener for removal. Thus, the fastener is effectively, for practical purposes, located in said item/s substantially permanently in a non removable manner.

FIGURE B shows a second known embodiment of a security screw fastener 200. The fastener 200 is, once again, formed as a one-piece unit and differs from the fastener 100 in the diameter of shank 201 and shape of head 202 (being a button rather than countersink head). Integral component 203,204 is of a different shape to component 103,104 but the principle of operation is similar to that described in relation to FIGURE A, as should be evident from the FIGURE.

Once neck portion 204 is broken at the bottom, once again the periphery of the head 202 being circular and the head shape being domed has no convenient means or adapted configuration for an access tool to attain purchase to remove the fastener. Furthermore, since the bottom of the neck portion 204 will break off substantially flush with, or below, the top of the head portion 202, there will be no internal configuration allowing an access tool to gain purchase on the fastener for removal. Thus, the fastener is effectively, for practical purposes, located in said item/s permanently in a non removable manner.

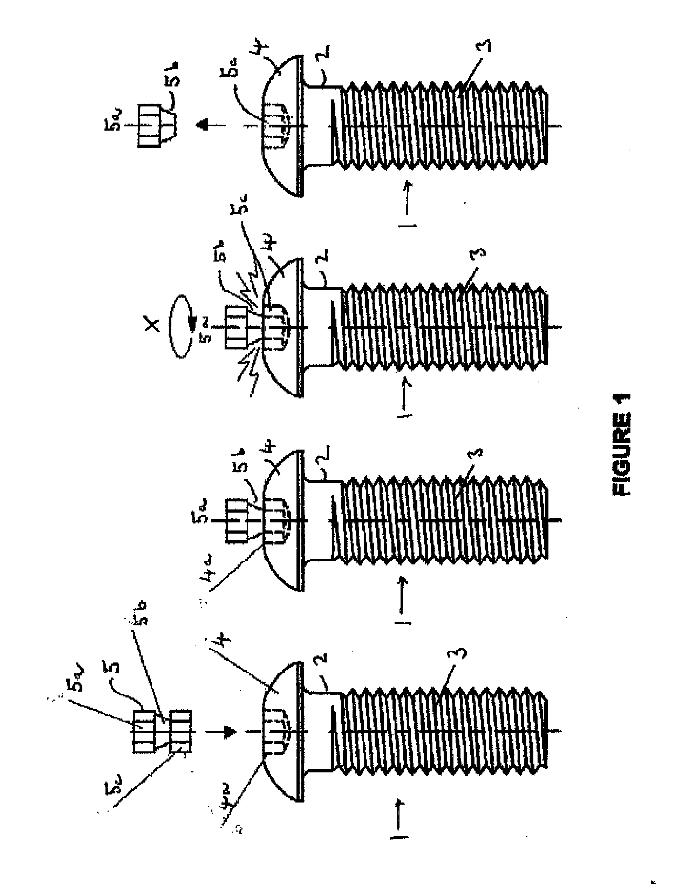

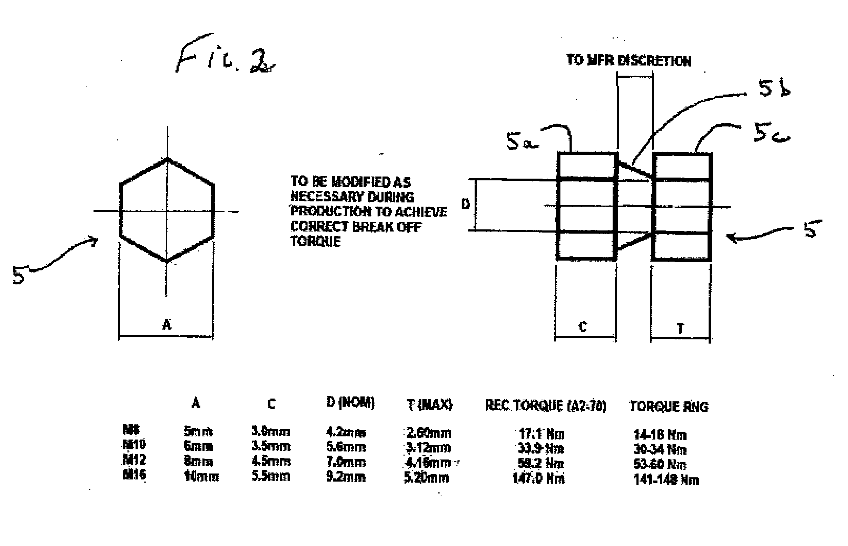

FIGURE 1 of the drawings shows an embodiment of the present invention as applied to a standard socket button head screw - the tool drive in this case being a hexagon for use with a standard hexagon socket or spanner. FIGURE 1 shows schematically four views of a security fastener 1 illustrating the assembly of the fastener through to the permanent location in an item or items (not shown) to which the fastener is to be fixed in use in a generally non-removable manner. Stage 1 at the left of FIGURE 1 shows the two part fastener 1 consisting of screw 2 of known configuration having a threaded shank 3 with a button head 4. The screw head 4 is provided with a central formation in the form of hexagonal socket or recess 4a co-operable with separate or non-integral component part 5. FIGURE 2 shows enlarged views of the component part 5 with possible dimensions and torque values given

It is to be noted, as shown, that the bottom of recess 4a can be slightly depressed. It should be obvious that the screw head recess 4a would be co-operable, in use, with a suitably sized Allen key or the like to fit the screw to an item or items, having a prepared opening or hole, upon suitable rotation of the Allen key. The screw 2 would then be fixed to said item/s in a removable (i.e. non-secured) manner since it could easily be removed on reverse rotation of the Allen key.

However, advantageously, the component part 5 is provided to convert the screw 2 into a security fastener in a manner to be described.

Advantageously, component part 5 is manufactured from common hexagonal bar stock already matched to the hexagonal configuration of recess 4a. Component part 5 has a first portion 5a of hexagonal configuration integral with a second, narrower, downwardly tapering, frangible, neck portion 5b in turn joined to a third, insertion portion 5c of similar hexagonal configuration to the first portion. The first and third portions are of similar configuration since neck portion 5b has been turned from bar stock, in a manner which should be evident. Stage 1 shows component part 5 being inserted axially into the head 4.

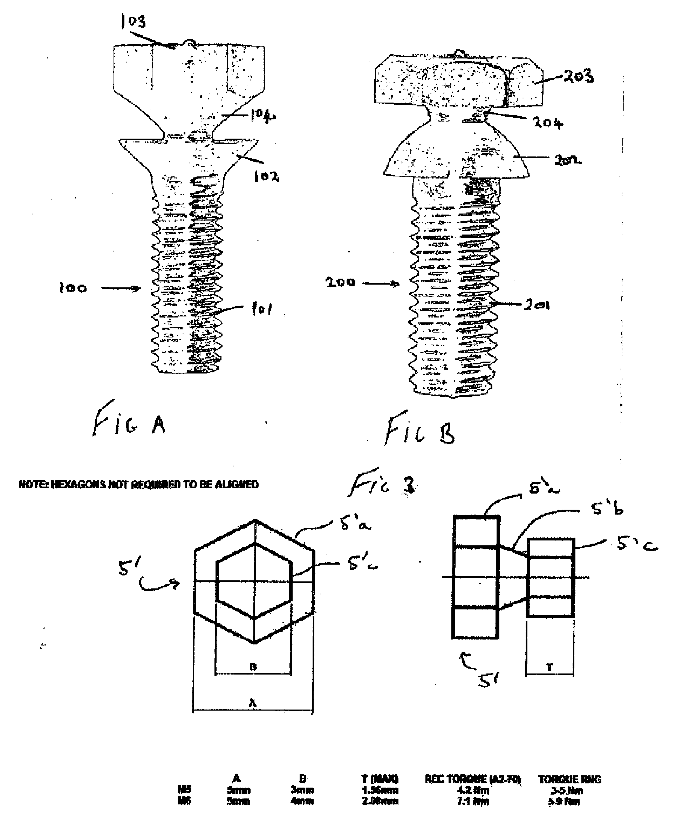

FIGURE 3 shows similar views of a slightly modified component part 5' in which first portion 5a' is somewhat larger that third portion 5c' for use where bar stock of the required dimensions is not readily available. Possible dimensions and torque values are given in FIGURE 3.

Stage 2 shows the component part 5 fully attached to the head 4 with the third portion 5c fully inserted into the accommodating recess 4a.

Importantly, said third portion 5c may be fixedly engaged in recess 4a by means of an interference fit or more conveniently permanently bonded simply by the use of a suitable adhesive (e.g. an anaerobic adhesive). Use of an adhesive is preferred since permanent attachment can be achieved by hand pressure alone, thereby obviating the need for any specialist assembly tooling that may be required e.g. for an interference fit. Said third portion 5c may be attached to the recess 4a by any suitable or convenient means such as by welding or brazing. The depressed bottom of recess 4a is suitable for accommodating an adhesive, where an adhesive is employed.

Stage 3 shown in FIGURE 1 depicts the security fastener 1 being attached to a prepared opening or hole (not shown) in an item or items (not shown) upon appropriate rotation of component 5 (in direction of arrow X) via the first portion 5a in co-operation with an access tool (not shown) such as a socket or spanner.

Stage 3 shows the neck portion 5b breaking at the bottom (weakest area) at a preselected torque after the fastener 1 has been tightly engaged in said item/s with the underside of the head 4 being tightly located against said item or items.

Stage 4 of FIGURE 1 shows the first portion 5a and neck portion 5b being removed from the remainder of the fastener (screw 2 and third portion 5c). Portion 5c is permanently engaged in recess 4a and blocks off any access a tool might otherwise have had to remove the screw 2. Thus, there is no internal or external configuration allowing an access tool to gain purchase on the remainder of the fastener (screw 2 and third portion 5c) for removal.

Whilst FIGURE 1 shows the application of the present invention with an 'industry standard' screw having a hexagonal socket recess it is to be appreciated that the configuration of the recess may be of any chosen shape and not necessarily a readily available shape.

Embodiments of the present invention may enable any mass produced or bespoke, male threaded fasteners to be easily converted into shear off (non-removable/permanent) fasteners by the attachment of a suitable separately formed component part having a break away portion and a first portion co-operable with an access tool. The head may be of any desired configuration e.g button, countersunk or hexagon.

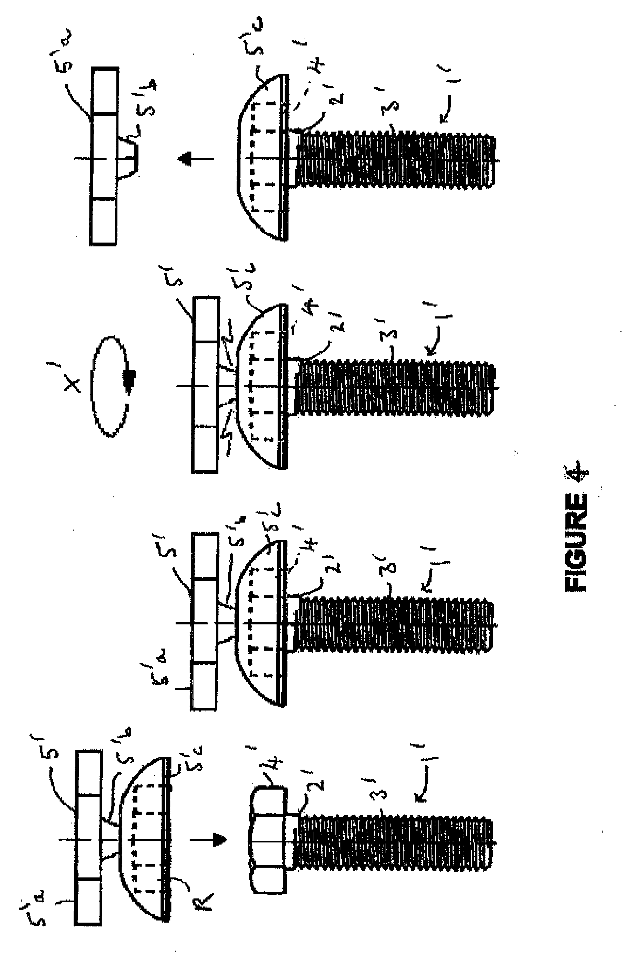

In fact, FIGURE 4 shows an embodiment of the present invention as applied to a standard hexagon setscrew - the tool drive in this case is hexagon for use with a standard hexagonsocket or spanner.

FIGURE 4 of the drawings show schematically four views of a second embodiment of a security fastener 1', having a hexagon head 4', illustrating the assembly of the fastener through to the permanent location in an item or items (not shown) to which the fastener 1' is to be fixed in use in a generally non-removable manner. Stage 1 at the left of FIGURE 4 shows the two part fastener 1' consisting of screw 2' of known configuration having a threaded shank 3' with hexagon head 4'. The hexagon head 4' is co-operable with a separate or non-integral component part 5'.

Component part 5' has a first portion 5a' co-operable with an access tool, which portion is joined to a frangible neck portion 5b' which, in turn, is joined to a button shaped third portion 5c'. In this instance, the third portion 5c' has a hexagon shaped recess R matched to the hexagon formation of the head 4' and said third portion is permanently attached to the head 4' via said head being inserted in said recess R. Once again the third portion 5c' may be attached to the head 4' by any convenient means, preferably by gluing with an anaerobic adhesive.

Stage 2 of FIGURE 4 shows component 5' permanently attached to screw 2' and stages 3 and 4 of FIGURE 54 are similar to stages 3 and 4 of FIGURE 1 showing the first and second portions 5b' and 5c' rotated in direction of arrow X' and then being broken away from the remainder of the fastener 1', leaving no internal or external configuration allowing an access tool to gain purchase on the remainder of the fastener (screw 2' and third portion 5c') for removal.

Embodiments of the present invention, advantageously, may provide a screw component that will enable any 'industry standard' fastener to be converted into a shear off (non-removable/permanent) fastener, therefore, ensuring a wide range of sizes available at a much reduced lead time and at a reduced cost.

It is to be understood that the scope of the present invention is not to be unduly limited by the particular choice of terminology and that a specific term may be replaced or supplemented by an equivalent or generic term. For example, the term 'fastener' could be replaced by 'fastening means'. Further it is to be understood that individual features, method or functions relating to the security fastener or component part or combinations thereof might be individually patentably inventive. The singular may include the plural and vice versa. Additionally, any range mentioned herein for any parameter or variable shall be taken to include a disclosure of any derivable sub-range within that range or of any particular value of the variable or parameter arranged within, or at an end of, the range or sub-range.

Whilst the component part has been described as being permanently attachable or attached to the fastener it is to be understood that e.g. where the component part is attached by adhesive, and the component part has not yet been broken, it might still be possible, in some embodiments of the present invention, for that adhesive bond to be broken (e.g. by a solvent or other chemical/non-mechanical means such as heat treatment) and the component removed.

## Claims

1. A security fastener comprising a head with a formation co-operable with a separately formed or non-integral component part having a first portion and a second, frangible portion, said first portion being co-operable, in use, with an access tool, the arrangement being such that the component part can be attached to the head via said co-operable formation prior to the fastener being attached to an item or items with the use of said access tool in co-operation with said first portion, said frangible portion being broken, in use, to leave the head with no convenient means or adapted configuration for an access tool to attain purchase to remove the remainder of the fastener.

2. A security fastener as claimed in claim 1 attachable to said item/s on rotation of an access tool engaging said first portion of the component part.

3. A security fastener as claimed in claim 1 or claim 2 in which the co-operable formation comprises a slot or recess that receives the component part and, preferably, in which the slot or recess is hexagonal and/or in which the frangible portion is a neck portion and, preferably, in which the bottom of the neck portion is breakable off at or just below the top of the head leaving no projection that could be engaged by an access tool.

4. A security fastener as claimed in claim 1 or claim 2 in which the component part is provided with a socket or recess that receives a co-operable formation in the form of the head of the security fastener and, preferably, in which the socket or recess is hexagonal and/or, in which the frangible portion is a neck portion.

5. A security fastener as claimed in any one of the preceding claims in which the component part is fixable to the fastener head in a substantially permanent or non-removable manner, preferably, by an interference fit and/or by using an adhesive.

6. A security fastener as claimed in any one of the preceding claims in which the component part comprises an integral third portion of greater width than the frangible portion, said third portion being insertable in, or attached over, as the case may be, the co-operable formation on the fastener head and, possibly, in which the socket or recess is provided in said third portion, the bottom of the neck portion being breakable off at or just below the top of said third portion leaving no projection that could be engaged by an access tool.

7. A security fastener as claimed in any one of the preceding claims in which said co-operable formation comprises a known formation normally utilisable for screwing the head and shank into/onto said item or items and, preferably, in which said formation is multilobular and/or in which the component part is fashioned from bar stock already matched to the co-operable formation and, possibly, in which said first and third portions of the component part are of a similar shape and size and, possibly, in which the first portion and frangible portion are breakable away from the remainder of the fastener, leaving the third portion attached to the fastener head blocking access to said co-operable formation with an access tool.

8. A component part adapted for attachment to the head of a fastener to provide a security fastener, said component part being co-operable with a formation on the fastener head and said component part having a first portion and a second, frangible portion, said first portion being co-operable, in use, with an access tool, the arrangement being such that the component part can be attached to the head via said co-operable formation prior to the fastener being attached to an item or items with the use of said access tool in co-operation with said first portion, said frangible portion being broken, in use, to leave the head with no convenient means or adapted configuration for an access tool to attain purchase to remove the remainder of the fastener.

9. A component part as claimed in claim 8 in which the frangible portion is a neck portion connected to a third portion of the component part, said third portion being insertable in, or attachable to or over, the co-operable formation on the fastener head.

10. A method of making a security fastener, said method comprising making a separate component part having a first portion co-operable, in use, with an access tool and having a frangible neck portion, said method comprising attaching the separate component part to a head of the security fastener in a non-removable or permanent manner, e.g. by adhesive.

11. A method as claimed in claim 10 comprising making the component part with a third portion adjacent to the neck portion, said third portion being attached to a co-operable formation on said head and, preferably, in which said co-operable formation is an existing, standard formation.

12. A security fastener having a head, a threaded shank and a component part attached to the head and which can be broken at a pre-selected torque during attachment of the fastener to an item or items, **characterised by** the component part being fashioned as a separate unit non-removably attached or attachable to the head.

13. A component part for a security fastener as claimed in claim 12.

14. A component part as claimed in claim 13 having a first portion and a second, frangible portion, said first portion, in use, being co-operable with an access tool, said frangible portion, preferably, being a neck portion, and, preferably, being attached to a third portion insertable in, or attachable to or over, the head of the security fastener.

15. A security fastener, having one or more of the following features:-
a) two separately made parts substantially permanently attached to one another, preferably comprising a component part having a frangible neck portion, said component part preferably being non-removably attached or attachable to a head of a fastener
b) a component part non-removably attached or attachable to a co-operable formation on a head of a fastener, said formation, preferably, being a standard formation than can be utilised with an access tool,
c) a component part non-removably attached/attachable to a fastener head, said component part having a first portion co-operable with an access tool.
